# EUROPÄISCHE PATENTSCHRIFT

(11) **EP 2 344 724 B1**
(45) Veröffentlichungstag und Bekanntmachung des Hinweises auf die Patenterteilung: **17.10.2012**
(21) Anmeldenummer: 09782461.9
(22) Anmeldetag: 01.09.2009
(51) Int. Cl.: F01D 17/14, F16K 3/26

(54) **TURBINE MIT KOMPAKTEM EINSTRÖMGEHÄUSE DANK INNEN LIEGENDER REGELVENTILE**
TURBINE WITH COMPACT INFLOW HOUSING ON ACCOUNT OF REGULATING VALVES SITUATED AT THE INSIDE
TURBINE AVEC BOÎTIER COMPACT D'ADMISSION GRÂCE À DES VANNES DE RÉGULATION SITUÉES À L'INTÉRIEUR

(30) Priorität: 10.11.2008 DE 102008056617
(43) Veröffentlichungstag der Anmeldung: 20.07.2011
(73) Patentinhaber: Siemens Aktiengesellschaft, 80333 München (DE)
(72) Erfinder: SCHNEIDER, Rico, 02906 Hohendubrau (DE)
(86) Internationale Anmeldenummer: PCT/EP2009/061279
(87) Internationale Veröffentlichungsnummer: WO 2010/052041

(56) Entgegenhaltungen:
- EP-A- 0 568 905
- EP-A- 1 557 537
- EP-A- 1 637 783
- EP-A- 1 914 393
- DE-A1- 3 404 921
- US-A- 2 937 623

## Beschreibung

### Technisches Gebiet

Die vorliegende Erfindung betrifft ein Stellelement für ein Regelventil eines Einströmgehäuses einer Turbine, sowie das Einströmgehäuse der Turbine. Ferner betrifft die vorliegende Erfindung ein Verfahren zum Einstellen eines Stellelements eines Regelventils für ein Einströmgehäuse einer Turbine.

### Hintergrund der Erfindung

In Turbinen, insbesondere in Dampfturbinen, werden Einströmgehäuse verwendet, in welchen ein Turbinenläufer drehbar gelagert ist. Ein Arbeitsmedium, wie beispielsweise Wasserdampf, kann durch einen Einströmkanal in dem Einströmgehäuse gezielt an einer bestimmten Einströmstelle auf den Läufer gerichtet werden, so dass dieser mittels des Arbeitsmediums angetrieben werden kann.

In dem ringförmigen Einströmkanal des Einströmgehäuses können sich in Umfangsrichtung jeweils mehrere Regelventile befinden, welche einen Durchfluss des Arbeitsmediums entlang des Einströmkanals steuern können. Diese Regelventile bestehen üblicherweise aus Regelklappen. Dahingegen kommen innerhalb der konventionellen Einströmung von Dampfturbinen Glockenventile oder Ventilbalken zum Einsatz. Gekoppelt an einen entsprechenden Antrieb, kann mit diesen Stellelementen der Massenstrom des Arbeitsmediums gesteuert werden und damit definierte Teillast- oder Volllastbereiche der Dampfturbine angefahren werden.

EP 1 637 783 A1 offenbart eine Schnellschluss-Stellventilkombination für eine Dampfturbine mit einem Schnellschlussventil und einem Stellventil. Das Stellventil ist mit einem Ventilkolben ausgebildet, der in einem Ventilzylinder beweglich gelagert ist und in dem eine Queröffnungsfläche durch Bewegen des Ventilkolbens relativ zum Ventilzylinder in ihrer Größe veränderbar ist.

EP 0 568 905 A1 offenbart eine Dampfturbine mit einem Drehschieber zur Steuerung des Dampfdurchsatzes und einem Kanalkörper. Der Kanalkörper besteht aus einem Adapterteil, in dem Kanaleingänge ausgebildet sind, und einem Basisteil, in dem sich die zur Dampfleitung erforderlichen Dampfkanäle befinden. Die Kanaleingänge, welche entsprechend einer vorgesehenen Steuercharakteristik definiert sind, verbinden die Steuerschlitze mit den Dampfkanälen.

EP 1 914 393 A2 offenbart ein Dampfventil für eine Dampfturbine. Das Dampfventil weist einen Ventilsitz und einen Ventilkörper auf, welcher verschiebbar angeordnet ist, so dass der Ventilkörper auf dem Ventilsitz anliegt oder nicht. Ferner ist in dem Ventilkörper ein Bypassventilkörper verschiebbar angeordnet. Der Ventilkörper weist Einlasskanäle auf, durch welche ein Fluid von außen nach innen in den Ventilkörper strömt.

DE 34 04 921 A offenbart ein Leitschaufelsystem mit parallelen Leitschaufeln. Zur Einstellung des durch das Leitschaufelsystem strömenden Fluides sind Ventile in den Strömungskanälen zwischen den Leitschaufeln angeordnet. Die Ventile sind mit Vorrichtungen zur individuellen Einstellung von jeweils nur einem Ventil zur gleichen Zeit versehen.

### Darstellung der Erfindung

Der Erfindung liegt die Aufgabe zugrunde, eine Strömungsregelung für eine Turbine zu verbessern.

Die Aufgabe wird durch ein Stellelement für ein Regelventil eines Einströmgehäuses einer Turbine sowie mit dem Einströmgehäuse für eine Dampfturbine gemäß den unabhängigen Patentansprüchen gelöst. Ferner wird diese Aufgabe durch ein Verfahren zum Einstellen eines Stellelements eines Regelventils für ein Einströmgehäuse einer Turbine mit den Merkmalen gemäß dem unabhängigen Verfahrensanspruch gelöst.

Gemäß einer ersten beispielhaften Ausführungsform wird ein Stellelement für ein Regelventil eines Einströmgehäuses einer Turbine bereitgestellt. Das Stellelement weist einen Durchlasskanal für ein Arbeitsmedium auf. Das Stellelement ist in dem Einströmgehäuse derart verstellbar lagerbar, dass in einer geöffneten Position des Stellelements der Durchlasskanal bündig mit einem Einströmkanal des Einströmgehäuses ist.

Gemäß einer weiteren beispielhaften Ausführungsform wird ein Einströmgehäuse für eine Turbine bereitgestellt. Das Einströmgehäuse weist einen Einströmkanal und das oben beschriebene Stellelement auf. Der Einströmkanal verläuft entlang einer Umfangrichtung eines Einströmgehäuses. Das Einströmgehäuse weist ferner eine radiale Aufnahmebohrung auf, in welcher das Stellelement aufgenommen ist.

Gemäß einer weiteren beispielhaften Ausführungsform wird ein Verfahren zum Einstellen eines Stellelements eines Regelventils für ein Einströmgehäuse einer Turbine beschrieben. Das Stellelement wird in dem Einströmgehäuse derart verstellt, dass in einem geöffneten Zustand des Stellelements ein Durchlasskanal bündig mit dem Einströmkanal des Einströmgehäuses eingestellt wird.

Unter dem Begriff "Stellelement" kann ein fester Körper verstanden werden, welcher verstellbar (drehbar) lagerbar ist und einen Strömungskanal (Einströmkanal) öffnen und schließen kann.

Unter dem Begriff "Durchlasskanal" des Stellelements kann eine Durchgangsöffnung bzw. ein Durchgang verstanden werden, durch welchen ein Arbeitsmedium den Bereich des Stellelements passieren kann.

Das Stellelement kann in Turbinen verwendet werden, insbesondere in Dampfturbinen. Ferner kann das Stellelement ebenso in Wasserturbinen, z.B. bei Staudämmen, oder auch in Gasturbinen eingesetzt werden.

Unter dem Begriff "Arbeitsmedium" kann im Bereich des Dampfturbinenbaus Wasserdampf verstanden werden, aber auch andere flüssige oder gasförmige Arbeitsmedien, welche sich eignen, eine Turbine anzutreiben bzw. welche eine Antriebskraft auf einen Turbinenläufer übertragen können.

Unter dem Begriff "Einströmkanal" des Einströmgehäuses kann eine Bohrung bzw. eine Nut in dem Einströmgehäuse verstanden werden, durch welche das Arbeitsmedium strömen kann, um an einer gewünschten Position einem Turbinenläufer im Inneren des Einströmgehäuses zur Verfügung gestellt zu werden. Der Einströmkanal kann beispielsweise entlang eines ringförmigen Einströmgehäuses verlaufen. Dabei kann der Einströmkanal z.B. in der Mantelfläche des Einströmgehäuses eingefräst werden oder auch in das Einströmgehäuse gebohrt werden. Der Einströmkanal kann mit anderen Worten tangential in Umfangrichtung bzw. rechtwinklig zu einer radialen Richtung des Einströmgehäuses verlaufen. Eine Profilmittellinie des Einströmkanals kann an jeder Stelle des Einströmkanals rechtwinklig zu der radialen Richtung des Einströmgehäuses ausgerichtet sein.

Unter dem Begriff "bündig" kann ein stetiger Übergang zwischen dem Einströmkanal und dem Durchlasskanal verstanden werden. Mit dem Begriff "bündig" kann beschrieben werden, dass keine Körper in den Einströmkanal und/oder den Durchlasskanal hineinragen, welche Turbulenzen oder Verwirbelungen des durchströmenden Arbeitsmediums verursachen könnten. Wenn der Durchlasskanal bündig mit dem Einströmkanal eingestellt ist, kann dies bedeuten, dass eine Kante des Stellelements im Bereich des Durchlasskanals an einer Kante des Einströmkanals des Einströmgehäuses derart anliegt, dass ein stetiger Übergang der Oberflächen des Durchlasskanals und des Einströmkanals bereitgestellt werden kann. Mit anderen Worten stimmt die Innenkontur bzw. die Profilform des Durchlasskanals mit der Innenkontur bzw. der Profilform des Einströmkanals überein, wenn die Kanten und Abmessungen des Stellelements bündig mit dem Einströmgehäuse, bzw. wenn der Durchlasskanal bündig mit dem Einströmkanal eingestellt ist.

Üblicherweise werden auf dem Gebiet der Turbinen, insbesondere der Dampfturbinen, bei einer konventionellen Einströmung Glockenventile eingesetzt. Bei Einströmkanälen in Einströmgehäusen werden üblicherweise zentrisch gelagerte Klappen verwendet. Bei voll geöffnetem Zustand der Klappe muss diese jedoch von dem Arbeitsmedium umströmt werden, so dass hierbei ein Strömungswiderstand entsteht. Bei sich schnell ändernden Klappenpositionen verursacht die zentrische Anordnung der Klappe im Einströmkanal größere Turbulenzen. Daher sind üblicherweise solche Klappen der Regelventile dünn ausgeführt, um einen Strömungswiderstand zu verringern. Diese dünne Ausführung der Klappen führt jedoch wiederum zu Schwingungen der Klappe bei Beaufschlagung von wechselhaften Strömungsdrücken, so dass wiederum ein Strömungswiderstand geschaffen werden kann. Zusätzlich ist die Auslegung der Klappendicke stets ein Kompromiss hinsichtlich der Festigkeit der Regelklappe. Je dünner die Regelklappe, desto besser ist dies für die Strömung aber schlechter ist dies für die Festigkeit der Regelklappe und umgekehrt.

Mittels des beanspruchten Stellelements für ein Regelventil eines Einströmgehäuses kann die geöffnete Position des Stellelements derart eingestellt werden, dass im Strömungskanal (Einströmkanal) keine Strömungswiderstand erzeugende Elemente vorhanden sind. Mit anderen Worten kann der Durchlasskanal des Stellelements bündig mit dem Einströmkanal des Einströmgehäuses anliegen, so dass ein stetiger Übergang bereitstellbar ist. Da somit das Stellelement in einer geöffneten Position nicht mehr in dem Einströmkanal des Einströmgehäuses hineinragt, kann das Stellelement dicker und massereicher ausgebildet werden, so dass eine höhere Stabilität und Festigkeit erzeugt werden kann. Somit kann ohne Strömungsverlust ein größeres Stellelement mit einer sehr steifen Struktur hergestellt werden, wodurch die Bauteilspannungen und Verformungen reduziert werden. Ferner kann bei einem größer ausgebildeten Stellelement auch ein Einsatz weniger fester Werkstoffe ermöglicht werden. Dadurch können die Anschaffungs- und die Fertigungskosten des Stellelements reduziert werden.

Somit kann der durch die Klappe generierte Druckverlust innerhalb der Frischdampfeinströmung, z.B. innerhalb des Einströmkanals, durch die Verwendung des beanspruchten Stellelements reduziert werden. Dies bedeutet, dass bei gleichen Eingangsparametern für die Dampfturbine mehr Leistung erzeugt werden kann, wodurch wiederum eine Erhöhung des Gesamtwirkungsgrades der Dampfturbine erzielt werden kann. Dies bedeutet gerade für den Betreiber einer Dampfturbine einen großen Nutzen, da das Stellelement in einem geöffneten Zustand aus der Strömung herausgenommen wird und somit keinen Strömungswiderstand erzeugt.

Gemäß einer weiteren beispielhaften Ausführungsform weist das Stellelement eine Koppelfläche auf, wobei die Koppelfläche eingerichtet ist, eine Steuerkraft von einem Steuerelement aufzunehmen. Mit der beispielhaften Ausführungsform kann an der Koppelfläche eine Antriebskraft bzw. Steuerkraft übertragen werden, beispielsweise durch magnetische Kopplung oder mechanische Kopplung.

Gemäß einer weiteren beispielhaften Ausführungsform weist das Stellelement einen ersten Schenkel auf. Der erste Schenkel kann sich in radialer Richtung des Einströmgehäuses erstrecken und einen Teil des Durchlasskanals ausbilden. Der erste Schenkel ist derart eingerichtet, dass in einem geschlossenen Zustand des Stellelements der Einströmkanal strömungsdicht verschlossen werden kann. Der erste Schenkel ist ferner derart eingerichtet, dass in einem geöffneten Zustand der erste Schenkel in einer Aufnahmenut des Einströmgehäuses bündig anliegt. Der erste Schenkel kann sich beispielsweise derart drehen, dass er einerseits ein Verschlusselement des Stellelements darstellt und den Einströmkanal verschließt. Andererseits kann der Schenkel derart verdreht werden, dass er in der geöffneten Position den Durchlasskanal ausbildet.

Der Schenkel kann dabei beispielsweise exzentrisch zu einer Drehachse des Stellelements angeordnet sein, um sich bei einer Drehung des Stellelements in den Einströmkanal hineinzudrehen oder hinauszudrehen. Die Aufnahmenut des Einströmgehäuses kann beispielsweise dieselbe Form und dasselbe Volumen wie der erste Schenkel aufweisen, so dass der erste Schenkel mit seinem gesamten Volumen in die Aufnahmenut hineinragen kann, so dass kein Bereich des ersten Schenkels in einem geöffneten Zustand in den Einströmkanal hineinragt. Je nach Volumen und Größe der Aufnahmenut kann der erste Schenkel mit seinem Volumen und seiner Form ausgebildet sein. Wird somit beispielsweise das Volumen und die Form der Aufnahmenut vergrößert, kann ein größerer erster Schenkel an dem Stellelement ausgebildet werden, wodurch sich wiederum die Festigkeit des ersten Schenkels und somit die des Stellelements erhöht. Die Aufnahmenut kann beispielsweise mittels eines Fräsers in das Einströmgehäuse in einfacher Art und Weise eingebracht werden.

Gemäß einer weiteren beispielhaften Ausführungsform ist der erste Schenkel mit einem ersten Ende an der Koppelfläche angebracht, wobei sich die Koppelfläche orthogonal zu dem ersten Schenkel erstreckt.

Gemäß einer weiteren beispielhaften Ausführungsform wird an einem zweiten Ende des Schenkels eine orthogonale Stützfläche angebracht. Die orthogonale Stützfläche ist eingerichtet, in einem Stützbereich des Einströmkanals bündig anzuliegen. Somit kann das Stellelement in dem Einströmgehäuse mittels der Stützfläche auf dem Stützbereich aufgesetzt werden, so dass eine stabile Auflage des Stellelements bereitgestellt werden kann.

Gemäß einer weiteren beispielhaften Ausführungsform ist das Stellelement zylindrisch ausgebildet, wobei eine Durchgangsöffnung in einer Mantelfläche des zylindrischen Stellelements den Durchlasskanal ausbildet. Eine Innenkontur des Durchlasskanals entspricht dabei einer Innenkontur des Einströmkanals. Das zylindrische Stellelement kann derart gedreht werden kann, dass ein stetiger Übergang zwischen der Innenkontur des Durchlasskanals und der Innenkontur des Einströmkanals einstellbar ist. Damit kann ein stetiger Übergang geschaffen werden, so dass Strömungsturbulenzen reduziert werden können.

Gemäß einer weiteren beispielhaften Ausführungsform ist das Stellelement in einer radialen Aufnahmebohrung des Einströmgehäuses lagerbar. Eine Mittelachse der radialen Aufnahmebohrung kann beispielsweise rechtwinklig zu einer Mittelachse des Einströmkanals im Bereich der radialen Aufnahmebohrung ausgebildet sein. Die radiale Aufnahmebohrung kann beispielsweise in radialer Richtung des Einströmgehäuses mittels Fräsens oder mittels Bohrens in das Einströmgehäuse eingebracht werden. Somit wird in einfacher Art und Weise eine Aufnahmeeinheit in dem Einströmgehäuse geschaffen, ohne komplexe und verwinkelte Fertigungsschritte durchführen zu müssen.

Gemäß einer weiteren beispielhaften Ausführungsform ist das Stellelement derart eingerichtet, dass mit der radialen Aufnahmebohrung eine Spielpassung ausbildbar ist. Mittels der Spielpassung zwischen dem Stellelement und der radialen Aufnahmebohrung kann ferner eine gute Lagerung (Drehung) des Stellelements in dem Einströmgehäuse bereitgestellt werden. Da das Stellelement mit dem ersten Schenkel oder mit der Zylinderform in geschlossener Position eine große Flächenüberlappung mit der Wandung der Aufnahmenut aufweist, kann eine gute Dichtigkeit geschaffen werden. Durch diese breiten Dichtflächen entlang der Kontur des Stellelementes mit der Aufnahmenut in der geschlossenen Position im Einströmkanal ist trotz Spielpassung eine gute Abdichtung möglich. Druckverluste, die durch Undichtigkeiten entstehen, können so reduziert werden. Weitere Dichtmittel, wie beispielsweise Gummidichtungen, sind dabei nicht notwendig.

Gemäß einer weiteren beispielhaften Ausführungsform weist das Stellelement ein Lagerelement auf. Das Lagerelement steht mit dem Einströmgehäuse derart in Eingriff, dass das Stellelement in der radialen Aufnahmebohrung zentriert ist. Das Lagerelement kann beispielsweise einen Zentrierungszapfen oder einen Lagerzapfen ausbilden, welcher in der radialen Aufnahmebohrung oder in einer weiteren Aufnahmebohrung in dem Einströmgehäuse eingreift und somit zentriert wird. Weitere Ausrichtungen des Stellelements, um eine definierte Lagerung und somit eine Drehbarkeit und eine Dichtigkeit zu erzielen, sind unnötig, da eine selbsttätige Zentrierung bereits während des Einbaus des Stellelements in das Einströmgehäuse bereitgestellt werden kann.

Gemäß einer weiteren beispielhaften Ausführungsform weist das Stellelement eine Lagerbuchse auf. Die Lagerbuchse ist eingerichtet, das Lagerelement des Stellelements in dem Einströmgehäuse drehbar zu lagern. Mittels der Lagerbuchse kann ein Gleitlager geschaffen werden, mit dem eine bessere Drehbarkeit des Stellelements in dem Einströmgehäuse bereitstellbar ist. Die Lagerbuchse kann drehfest an dem Einströmgehäuse angebracht werden.

Ferner kann das Stellelement mehrere Lagerelemente aufweisen und z.B. an zwei sich gegenüberliegenden Seitenwänden des Einströmgehäuses im Einströmkanal lagerbar sein. An jedem Lagerpunkt der gegenüberliegenden Seiten kann jeweils eine Lagerbuchse bereitgestellt werden. Da hierbei zwei Lagerpunkte, z.B. an jeder der zwei gegenüberliegenden Seiten, bereitstellbar sind, kann ein kleinerer Durchmesser des Lagerelements gewählt werden, um dieselbe Lagerkraft an das Einströmgehäuse zu übertragen. Mit einem kleineren Durchmesser des Lagerelements des Stellelements wird ebenso weniger Material für das Lagerelement verwendet, so dass eine thermische Verformung des Lagerelements reduziert wird. Somit kann eine präzisere Lagerung des Stellelements aufgrund z.B. einer reduzierten thermischen Verformung bereitgestellt werden.

Gemäß einer weiteren beispielhaften Ausführungsform weist der Einströmkanal des Einströmgehäuses im Bereich der radialen Aufnahmebohrung einen Bereich einer Materialverstärkung auf, wobei der Bereich der Materialverstärkung nach innen in den Einströmkanal hineinragt. Indem die Materialverstärkung nach innen in den Einströmkanal hineinragt, kann an der Außenfläche des Einströmkanals eine konstante und stetige Oberfläche bereitgestellt werden. Würde die Materialverstärkung nach au-βen bereitgestellt werden, müsste auf weitere Anbauten des Einströmgehäuses Rücksicht genommen werden. Würde die Materialverstärkung z.B. in radialer Richtung an der Außenfläche des Einströmgehäuses angeordnet werden müssen, so würde sich dadurch der Durchmesser des innen liegenden Turbinenläufers reduzieren. Bei einer Materialverstärkung nach außen, müsste z.B. der Läufer rotordynamisch anders ausgelegt werden. Dies wäre möglich, aber mit entsprechendem Aufwand verbunden. Da bei dem Stellelement keine Materialverstärkung an der Außenkontur notwendig ist, kann das Stellelement auch in bestehenden radialen Aufnahmebohrungen des Einströmgehäuses eingebracht werden. Somit kann beispielsweise ein Einströmgehäuse mit dem Stellelement nachgerüstet werden. Z.B. können Klappenventile in den bestehenden Aufnahmebohrungen des Einströmgehäuses in einfacher Art und Weise durch die Stellelemente ersetzt werden.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1A - Fig. 1C schematische Darstellungen des Stellelements in einem Einströmgehäuse in geöffneter Position gemäß einer beispielhaften Ausführungsform;
Fig. 2A - Fig. 2C schematische Darstellungen eines Stellelements mit einem ersten Schenkel gemäß einer beispielhaften Ausführungsform;
Fig. 2D eine schematische Darstellung eines Stellelements mit einer zylindrischen Form des Stellelements gemäß einer beispielhaften Ausführungsform;
Fig. 3 eine schematische Darstellung des Stellelements in geöffneter Position gemäß einer beispielhaften Ausführungsform;
Fig. 4 eine schematische Darstellung eines Stellelements in einer geschlossenen Position gemäß einer beispielhaften Ausführungsform;
Fig. 5 eine perspektivische Schnittdarstellung des Stellelements in einem Einströmgehäuse gemäß einer beispielhaften Ausführungsform;
Fig. 6A - Fig. 6B schematische Darstellungen eines Stellelements mit einer Lagerbuchse an einem Lagerelement gemäß einer beispielhaften Ausführungsform;
Fig. 7 eine schematische Darstellung des Stellelements mit einer Lagerbuchse und einem Lagerelement in eingebautem Zustand in einem Einströmgehäuse gemäß einer beispielhaften Ausführungsform; und
Fig. 8 eine schematische Darstellung einer konventionellen Klappe in einem Einströmkanal eines Einströmgehäuses.

### Detaillierte Beschreibung von exemplarischen Ausführungsformen

Gleiche oder ähnliche Komponenten sind in den Figuren mit gleichen Bezugsziffern versehen. Die Darstellung in den Figuren ist schematisch und nicht maßstäblich.

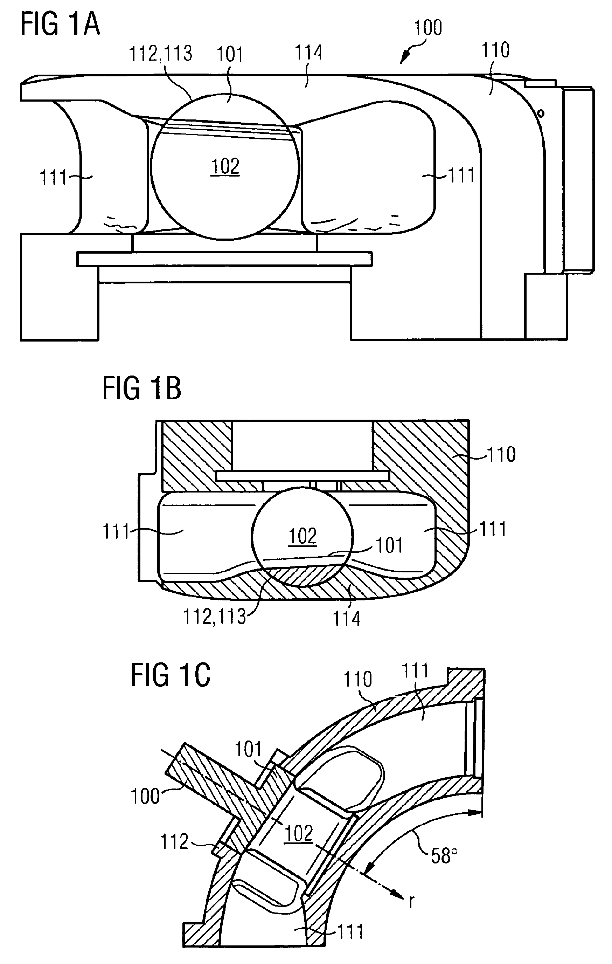

Fig. 1A zeigt eine beispielhafte Ausführungsform des Stellelements 101 für ein Regelventil 100 eines Einströmgehäuses 110 einer Turbine, insbesondere einer Dampfturbine. Das Stellelement 101 weist einen Durchlasskanal 102 für ein Arbeitsmedium auf. Das Stellelement 101 ist in dem Einströmgehäuse 110 derart verstellbar lagerbar, dass in einer geöffneten Position des Stellelements 101 der Durchlasskanal 102 bündig mit einem Einströmkanal 111 des Einströmgehäuses 110 ist.

Wie in Fig. 1A sichtbar, ist zwischen dem Stellelement 101 und der Wandung bzw. der Seitenfläche des Einströmkanals 110 des Einströmgehäuses 110 ein stetiger und bündiger Übergang, so dass keine in dem Durchlasskanal 102 hineinragenden Teile Turbulenzen in einer Strömung verursachen.

Ferner zeigt Fig. 1A, dass das Stellelement 101 in einer Aufnahmenut 113 in dem Einströmgehäuse 110 angeordnet werden kann. Die Aufnahmenut 113 kann beispielsweise mittels einer Fräse so in das Einströmgehäuse 110 eingebracht werden. Ferner kann in dem Bereich, in dem das Stellelement 101 in dem Einströmgehäuse 110 gelagert ist, ein Bereich mit einer Materialverstärkung 114 in dem Einströmgehäuse 110 bereitgestellt werden, um eine höhere Gehäusesteifigkeit zu erhalten und einen kontinuierlichen Übergang des Einströmkanals zum Durchlasskanal zu gewährleisten.

Fig. 1B zeigt eine zweidimensionale Darstellung des Ausführungsbeispiels von Fig. 1A. Es wird deutlich, dass der Einströmkanal 110 rechts und links von dem Stellelement 101 anliegt. Zwischen den Übergängen zwischen dem Einströmkanal 110 und dem Durchlasskanal 102 befindet sich ein stetiger und glatter Übergang, so dass keine Turbulenzen der Strömung vorkommen.

Fig. 1C zeigt einen vergrößerten Ausschnitt des Einströmgehäuses 110, in dem deutlich wird, dass das Einströmgehäuse kreisförmig ausgebildet sein kann. Wie in dem Beispiel von Fig. 1C kann in einem Abstand von 58° (Grad) entlang der kreisförmigen Umfangsrichtung des Einströmgehäuses 110 jeweils ein Regelventil 100 mit einem Stellelement 101 an dem Einströmgehäuse 110 angeordnet werden. Andere Abstandswinkel wie z.B. 10°, 30°, 70°,90° oder 180° (Grad) sind ebenso möglich. Der Einströmkanal 111 verläuft wie in Fig. 1C dargestellt, kreisförmig entlang der Umfangrichtung des Einströmgehäuses 110. Die Stellelemente 101 können mit ihrer Mittellinie (oder auch Symmetrielinie oder Drehachse) radial in Richtung des Mittelpunkts des Einströmgehäuses 110 ausgerichtet sein (d.h. entlang einer radialen Richtung r des Einströmgehäuses). Somit ist die Mittellinie der Stellelemente 101 jeweils orthogonal zu der Umfangslinie des Einströmkanals 111 ausgerichtet.

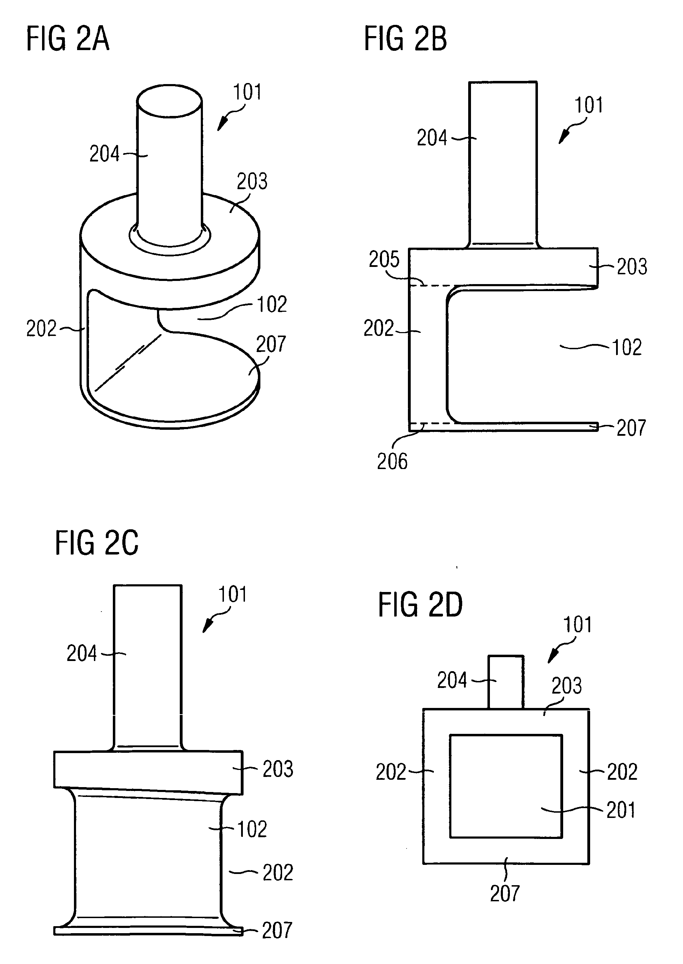

Die Fig. 2A - 2C zeigen eine beispielhafte Ausführungsform des Stellelements 101. Fig. 2A zeigt eine perspektivische Darstellung des Stellelements 101. Das Stellelement 101 weist dabei ein Steuerelement 204 auf, welches eine Steuerkraft an eine Koppelfläche 203 übertragen kann. Die Steuerkraft, welche auf die Koppelfläche 203 übertragbar ist, kann das Stellelement 101 veranlassen, sich z.B. zu drehen. In Fig. 2A wird ferner der erste Schenkel 202 dargestellt, welcher sich beispielsweise von der Koppelfläche 203 ausgehend von einem ersten Ende 205 des Schenkels 202 erstreckt. Die Erstreckung des Schenkels 202 ist nahezu parallel zu der radialen Richtung r in Richtung Mittelpunkt des Einströmgehäuses 110. Der erste Schenkel 202 ist dabei eingerichtet, in einem geschlossenen Zustand einen Fluidstrom des Arbeitsmediums in dem Einströmkanal 111 zu unterbinden. In einem geöffneten Zustand kann der erste Schenkel 202 in der Aufnahmenut 103 aufgenommen werden, so dass ein stetiger Übergang zwischen ersten Schenkel 202 oder dem Durchlasskanal 102 und dem Einströmkanal 111 bereitstellbar ist.

Wie insbesondere in Fig. 2B dargestellt, kann der erste Schenkel 202 exzentrischen zu einer Mittelachse (Symmetrielinie oder Drehachse) des Stellelements 101 angeordnet sein. Somit reicht eine einfache Drehung des Stellelements 101 aus, um den exzentrischen ersten Schenkel 202 in die Aufnahmenut 113 hineinzudrehen oder in den Einströmkanal 101 hineinzudrehen, so dass eine Dichtung bzw. eine Unterbrechung der Strömung im Einströmkanal 111 bereitstellbar ist. Ferner zeigen die Figuren Fig. 2A - 2C eine Stützfläche 207, welche beispielsweise an einer Wandung des Einströmgehäuses 110 angelegt werden kann. Somit kann eine Lagerfläche bereitgestellt werden, wodurch eine Kraftübertragung der Lagerkraft auf das Einströmgehäuse 110 bereitstellbar ist.

Fig. 2D zeigt eine weitere beispielhafte Ausführungsform des Stellelements 101, wobei das Stellelement 101 eine Zylinderform aufweisen kann und mittels einer Durchgangsöffnung 201 den Durchlasskanal 102 bereitstellen kann. Die Durchgangsöffnung 201 kann mit ihrer Innenkontur in einem geöffneten Zustand mit der Innenkontur des Einströmkanals 111 des Einströmgehäuses 110 entsprechen, so dass ein bündiger bzw. stetiger Übergang in einer geöffneten Stellung bereitstellbar ist. Mittels der zylindrischen Ausführungsform des Stellelements 101 können quasi zwei Schenkel bereitgestellt werden, welche auf einer Stützfläche 207 angelegt werden können, so dass eine festere Konstruktion des Stellelements 101 ermöglicht werden kann.

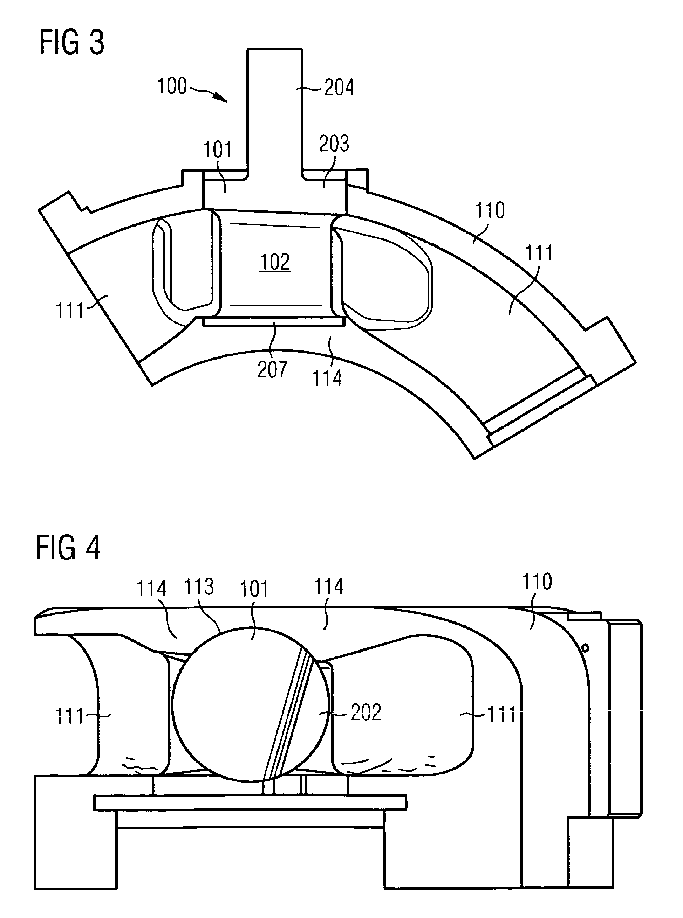

Fig. 3 zeigt eine schematische Darstellung des Stellelements 101 in einer geöffneten Position. Der Einströmkanal 111 verläuft kreisförmig innerhalb eines kreisförmig ausgeführten Einströmgehäuses 110. Das Stellelement 101 wird mit seiner Stützfläche 207 auf einer entsprechenden Lagerfläche an dem Einströmgehäuse 110 gelagert. In diesem Bereich kann an dem Einströmgehäuse 110 eine Nut eingefräst werden, welche in ihrer Form der Stützfläche 207 entspricht, so dass zumindest in einem geöffneten Zustand die Stützfläche 207 bündig mit der Wandung des Einströmkanals 111 ist und ein stetiger Übergang bereitstellbar ist.

Fig. 4 zeigt eine Draufsicht auf das Stellelement 101 in einer geschlossenen Position. Das Stellelement 101 ist mit seinem ersten Schenkel 202 aus der Aufnahmenut 113 herausgedreht und blockiert eine Strömung des Arbeitsmediums in dem Einströmkanal 111. Der erste Schenkel 202 bzw. das Stellelement 101 kann mit einer Spielpassung in die radiale Aufnahmebohrung 112 eingebracht sein. Die Dichtstellen bzw. der Übergang zwischen dem Schenkel 202 und der Wandung erlauben aufgrund breiter Dichtflächen eine Reduzierung der Leckagen im geschlossenen Zustand. Die Aufnahmebohrung 112 und insbesondere die Aufnahmenut 113 kann ferner in einem Bereich 114 einer Materialverstärkung eingebracht werden, so dass eine höhere Festigkeit bereitstellbar ist.

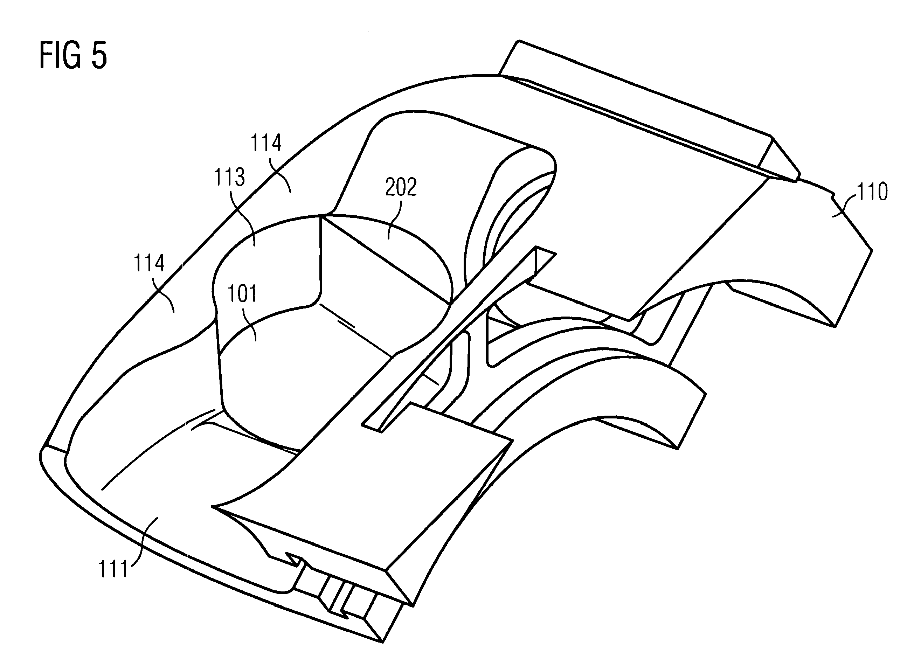

Fig. 5 zeigt eine perspektivische Schnittdarstellung der geschlossenen Position des Stellelements 101 gemäß Fig. 4. Es wird deutlich, dass der erste Schenkel 202 den Einströmkanal 111 abdichtet. Der erste Schenkel 202 ist aus der Aufnahmenut 113 herausgedreht und in einer geschlossene Position.

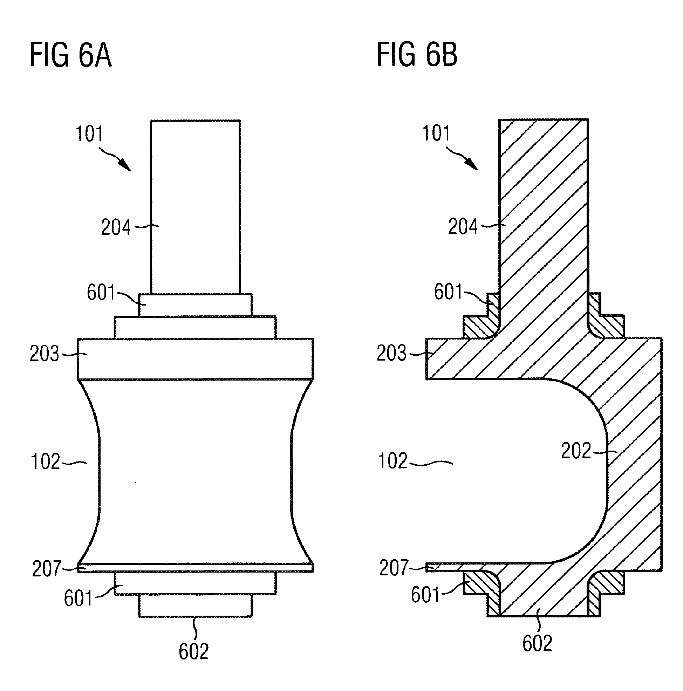

Fig. 6A und Fig. 6B zeigen eine weitere beispielhafte Ausführungsform des Stellelements. Das Stellelement 101 kann ferner eine Lagerbuchse 601 aufweisen, in welcher ein an dem Stellelement angebrachtes Lagerelement 602 eingreifen kann. Ein Lagerelement 602 kann eine Zapfenform aufweisen und somit in einer entsprechenden Bohrung in dem Einströmgehäuse 110 eingreifen. Bei Eingriff des Lagerelements 602 in einer entsprechenden Öffnung in dem Einströmgehäuse 110 kann sich das Stellelement 101 selbsttätig zentrieren und ausrichten. Ferner kann im Bereich des Lagerelements 602 die Lagerbuchse 601 angeordnet werden, so dass eine Gleitreibung bzw. Gleitlagerung bereitstellbar ist. Somit wird ein Verschleiß verringert. Dem Verschleißen der Lagerbuchsen kann durch Austausch dieser bei einer Revision entgegengewirkt werden, sodass Nacharbeiten am Gehäuse vermieden werden.

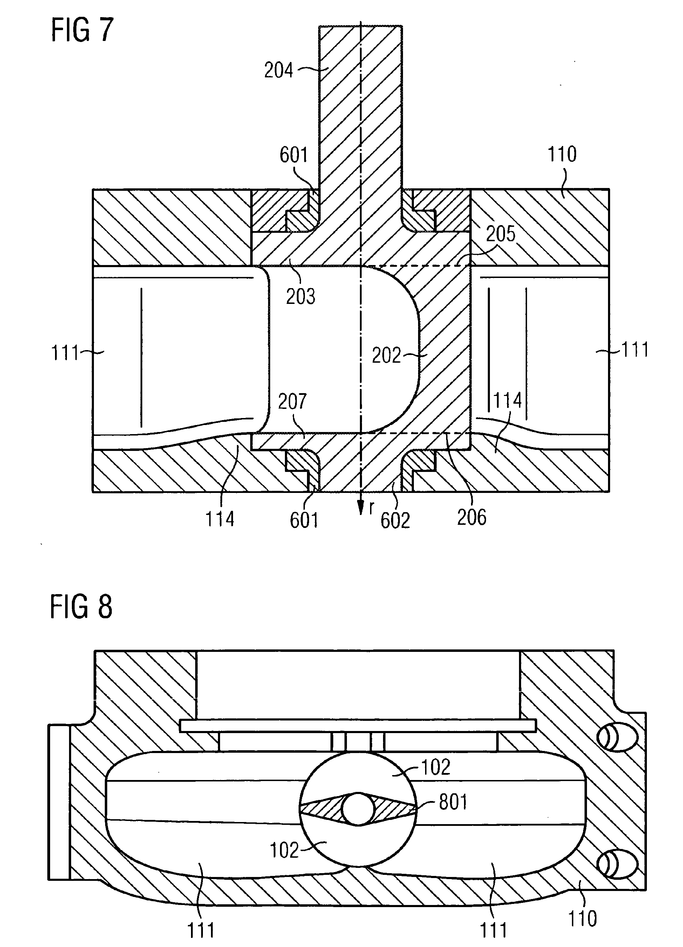

Fig. 7 zeigt eine beispielhafte Ausführungsform des Stellelements 101, wie in Fig. 6A und Fig. 6B dargestellt, in einer eingebauten Position in dem Einströmgehäuse 110. Das Lagerelement 602 kann in einer Öffnung in dem Einströmgehäuse 111 angeordnet sein, so dass sich das Stellelement 101 beispielsweise in einer radialen Richtung r des Einströmgehäuses automatisch ausrichtet und zentriert. Ferner wird die Lagerbuchse 601 gezeigt, welche zwischen dem Lagerelement 602 und der Bohrung in dem Einströmgehäuse 110 angeordnet ist. Somit kann eine verbesserte Lagerung und Drehung des Stellelements 101 bereitgestellt werden.

Ferner zeigt Fig. 7, dass das Stellelement 101 an zwei gegenüberliegenden Seiten des Einströmkanals 111 in dem Einströmgehäuse 110 mit den Lagerbuchsen 601 gelagert werden kann. So zeigt Fig. 7 an der oberen Durchgangsbohrung des Einströmgehäuses 110 eine Lagerbuchse 601 und ebenso an der unteren Durchgangsbohrung des Einströmgehäuses 110 eine weitere Lagerbuchse 601. Somit kann die Lagerkraft, welche eine Kraft des ersten Schenkels 202 auf das Einströmgehäuse 110 überträgt, aufgeteilt werden. Durch die Aufteilung der Kräfte bzw. der Lagerkraft, können die Durchmesser der Lagerpunkte bzw. die Durchmesser des Lagerelements 602, zum Beispiel des Lagerzapfens, verkleinert werden. Aufgrund der dadurch geringeren benötigten Festigkeit kann die Masse des Lagerelements 602 reduziert werden. Dies führt neben Materialkosteneinsparung auch zu einer Reduzierung der thermischen Verformung, so dass ein Verzug des Stellelements 201 reduziert werden kann.

Fig. 8 zeigt eine schematische Darstellung einer herkömmlichen Klappe bzw. Ventilklappe 801 zur Abdichtung eines Einströmkanals 111 in einem Einströmgehäuse 110. Es wird deutlich, dass selbst in geöffnetem Zustand der Ventilklappe 801 die Klappe in der Strömung in dem Einströmkanal 111 platziert werden muss, so dass ein Strömungswiderstand bzw. eine Turbulenz in der Strömung verursacht wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Einströmgehäuse (110) für eine Turbine, das Einströmgehäuse (110) aufweisend:
einen Einströmkanal (111),
ein Stellelement (101) für ein Regelventil (100) des Einströmgehäuses (110),
wobei der Einströmkanal (111) entlang einer Umfangsrichtung des Einströmgehäuses (110) verläuft, und
eine radiale Aufnahmebohrung (112) in welcher das Stellelement (101) aufgenommen ist,
wobei das Stellelement (101) einen Durchlasskanal (102) für ein Arbeitsmedium aufweist, und
wobei das Stellelement (101) in dem Einströmgehäuse (110) derart verstellbar gelagert ist, dass in einer geöffneten Position des Stellelements (101) der Durchlasskanal (102) bündig mit dem Einströmkanal (111) ist,
wobei das Stellelement (101) einen ersten Schenkel (202) aufweist,
wobei sich der erste Schenkel (202) in radialer Richtung (r) des Einströmgehäuses (110) erstreckt und einen Teil des Durchlasskanals (102) ausbildet,
wobei der erste Schenkel (202) eingerichtet ist, in einem geschlossenen Zustand des Stellelements (101) den Einströmkanal (111) strömungsdicht zu verschließen, und
wobei der erste Schenkel (202) eingerichtet ist, in dem geöffneten Zustand in einer Aufnahmenut (113) des Einströmgehäuses (110) bündig anzuliegen.

2. Einströmgehäuse (110) nach Anspruch 1,
wobei das Stellelement (101) eine Koppelfläche (203) aufweist, und
wobei die Koppelfläche (203) eingerichtet ist, eine Steuerkraft von einem Steuerelement (204) aufzunehmen.

3. Einströmgehäuse (110) nach Anspruch 2,
wobei an der Koppelfläche (203) der erste Schenkel (202) mit einem ersten Ende angebracht ist, und
wobei sich die Koppelfläche (203) orthogonal zu dem ersten Schenkel (202) erstreckt.

4. Einströmgehäuse (110) nach einem der Ansprüche 1 bis 3,
wobei an einem zweiten Ende des Schenkels (202) eine orthogonale Stützfläche (207) angebracht ist, und
wobei die orthogonale Stützfläche (207) eingerichtet ist, in einem Stützbereich des Einströmkanals (111) bündig anzuliegen.

5. Einströmgehäuse (110) nach einem der Ansprüche 1 bis 4,
wobei das Stellelement (101) derart eingerichtet ist, dass mit der radialen Aufnahmebohrung (112) eine Spielpassung ausgebildet ist.

6. Einströmgehäuse (110) nach einem der Ansprüche 1 bis 5, ferner aufweisend:
ein Lagerelement (602),
wobei das Lagerelement (602) mit dem Einströmgehäuse (110) derart in Eingriff ist, dass das Stellelement (101) in der radialen Aufnahmebohrung (112) zentriert ist.

7. Einströmgehäuse (110) nach Anspruch 6, ferner aufweisend:
eine Lagerbuchse (601),
wobei die Lagerbuchse (601) eingerichtet ist, das Lagerelement (602) des Stellelements (101) in dem Einströmgehäuse (110) drehbar zu lagern.

8. Einströmgehäuse (110) nach einem der Ansprüche 1 bis 7,
wobei der Einströmkanal (111) im Bereich der radialen Aufnahmebohrung (112) einen Bereich einer Materialverstärkung (114) aufweist,
wobei der Bereich der Materialverstärkung (114) nach Innen in den Einströmkanal (111) hineinragt.

9. Verfahren zum Einstellen eines Stellelements eines Regelventils (100) für ein Einströmgehäuse (110) einer Turbine, das Verfahren aufweisend:
ein Verstellen des Stellelements (101) in dem Einströmgehäuse (110) derart, dass in einem geöffneten Zustand des Stellelements (101) ein Durchlasskanal (102) bündig mit einem Einströmkanal (111) des Einströmgehäuses (110) eingestellt wird,
wobei der Einströmkanal (111) entlang einer Umfangsrichtung des Einströmgehäuses (110) verläuft,
wobei das Stellelement (101) in einer radialen Aufnahmebohrung (112) des Einströmgehäuses (110) aufgenommen ist,
wobei das Stellelement (101) einen ersten Schenkel (202) aufweist,
wobei sich der erste Schenkel (202) in radialer Richtung (r) des Einströmgehäuses (110) erstreckt und einen Teil des Durchlasskanals (102) ausbildet,
wobei der erste Schenkel (202) eingerichtet ist, in einem geschlossenen Zustand des Stellelements (101) den Einströmkanal (111) strömungsdicht zu verschließen, und wobei der erste Schenkel (202) eingerichtet ist, in dem geöffneten Zustand in einer Aufnahmenut (113) des Einströmgehäuses (110) bündig anzuliegen.

## Claims

1. Inflow housing (110) for a turbine, with the inflow housing (110) comprising:
an inflow duct (111),
a control element (101) for a regulating valve (100) of the inflow housing (110),
wherein the inflow duct (111) runs along a circumferential direction of the inflow housing (110), and
a radial receiving hole (112) in which the control element (101) is accommodated,
wherein the control element (101) has a transmission duct (102) for a working medium, and
wherein the control element (101) is supported adjustably in the inflow housing (110) such that, in an opened position of the control element (101) the transmission duct (102) is flush with the inflow duct (111),
wherein the control element (101) has a first arm (202),
wherein the first arm (202) extends in the radial direction (r) of the inflow housing (110) and embodies a part of the transmission duct (102),
wherein the first arm (202) is configured, in a closed state of the control element (101), to close off the inflow duct (111) such that the flow is sealed off, and
wherein the first arm (202) is configured, in the open state, to rest flush in a receiving groove (113) of the inflow housing (110).

2. Inflow housing (110) according to claim 1,
wherein the control element (101) has a coupling surface (203), and
wherein the coupling surface (203) is configured to accept a control force from a control element (204).

3. Inflow housing (110) according to claim 2,
wherein the first arm (202) is attached by a first end to the coupling surface (203), and
wherein the coupling surface (203) extends orthogonally to the first arm (202).

4. Inflow housing (110) according to one of claims 1 to 3,
wherein an orthogonal support surface (207) is attached to a second end of the arm (202), and
wherein the orthogonal support surface (207) is configured to rest flush in a support area of the inflow duct (111).

5. Inflow housing (110) according to one of claims 1 to 4,
wherein the control element (101) is configured such that a fit to allow play is embodied with the radial receiving hole (112).

6. Inflow housing (110) according to one of claims 1 to 5, further having:
a bearing element (602),
wherein the bearing element (602) engages with the inflow housing (110) such that the control element (101) is centred in the radial receiving hole (112).

7. Inflow housing (110) according to claim 6, further having:
a bearing bush (601),
wherein the bearing bush (601) is configured to rotatably support the bearing element (602) of the control element (101) in the inflow housing (110).

8. Inflow housing (110) according to one of claims 1 to 7,
wherein, in the area of the radial receiving hole (112), the inflow duct (111) has an area in which the material is reinforced (114),
wherein the area in which the material is reinforced (114) projects inwards into the inflow duct (111).

9. Method for setting a control element of a regulating valve (100) for an inflow housing (110) of a turbine, with the method featuring:
adjustment of the setting of the control element (101) in the inflow housing (110) such that, in an opened state of the control element (101), a transmission duct (102) is set flush with an inflow duct (111) of the inflow housing (110),
wherein the inflow duct (111) runs along a circumferential direction of the inflow housing (110),
wherein the control element (101) is accommodated in a radial receiving hole (112) of the inflow housing (110),
wherein the control element (101) has a first arm (202),
wherein the first arm (202) extends in the radial direction (r) of the inflow housing (110) and embodies a part of the transmission duct (102),
wherein the first arm (202) is configured, in a closed state of the control element (101) to close off the inflow duct (111) such that the flow is sealed off, and
wherein the first arm (202) is configured, in the open state, to rest flush in a receiving groove (113) of the inflow housing (110).

## Revendications

1. Carter d'admission (110) pour une turbine, ledit carter d'admission (110) comprenant :
un canal d'admission (111),
un actionneur (101) pour une vanne de régulation (100) du carter d'admission (110),
ledit canal d'admission (111) s'étendant selon une direction circonférentielle du carter d'admission (110), et
un alésage radial de réception (112) dans lequel est logé l'actionneur (101),
ledit actionneur (101) comportant un canal de passage (102) pour un fluide de travail, et
ledit actionneur (101) étant logé de façon ajustable dans le carter d'admission (110), de telle sorte que le canal de passage (102) est au même niveau que le canal d'admission (111) lorsque l'actionneur (101) est en position ouverte,
ledit actionneur (101) comportant une première branche (202),
ladite première branche (202) s'étendant dans le sens radial (r) du carter d'admission (110) et formant une partie du canal de passage (102),
ladite première branche (202) étant agencée pour obturer le canal d'admission (111), de façon étanche à l'écoulement, à l'état fermé de l'actionneur (101), et
ladite première branche (202) étant agencée pour s'appliquer dans une rainure de réception (113) du carter d'admission (110), au même niveau que celle-ci, à l'état ouvert.

2. Carter d'admission (110) selon la revendication 1,
dans lequel l'actionneur (101) comporte une surface de couplage (203), et
dans lequel la surface de couplage (203) est agencée pour recevoir un effort de commande d'un élément de commande (204).

3. Carter d'admission (110) selon la revendication 2,
dans lequel la première branche (202) est montée par une première extrémité sur la surface de couplage (203), et
dans lequel la surface de couplage (203) s'étend orthogonalement à la première branche (202).

4. Carter d'admission (110) selon l'une des revendications 1 à 3,
dans lequel une deuxième extrémité de la branche (202) est munie d'une surface d'appui orthogonale (207), et
dans lequel la surface d'appui orthogonale (207) est agencée pour s'appliquer dans une zone d'appui du canal d'admission (111), au même niveau que celle-ci.

5. Carter d'admission (110) selon l'une des revendications 1 à 4,
dans lequel l'actionneur (101) est agencé de manière à former un ajustement avec jeu avec l'alésage radial de réception (112).

6. Carter d'admission (110) selon l'une des revendications 1 à 5, comprenant en outre :
un élément de support (602),
ledit élément de support (602) étant en prise avec le carter d'admission (110), de telle sorte que l'actionneur (101) est centré dans l'alésage radial de réception (112).

7. Carter d'admission (110 selon la revendication 6, comprenant en outre :
un coussinet (601),
ledit coussinet (601) étant agencé pour loger l'élément de support (602) de l'actionneur (101) de manière rotative dans le carter d'admission (110).

8. Carter d'admission (110) selon l'une des revendications 1 à 7,
dans lequel le canal d'admission (111) présente dans la région de l'alésage radial de réception (112) une zone de renfort de matière (114),
ladite zone de renfort de matière (114) faisant saillie vers l'intérieur dans le canal d'admission (111).

9. Procédé de réglage d'un actionneur d'une vanne de régulation (100) pour un carter d'admission (110) d'une turbine, ledit procédé comprenant:
un ajustage de l'actionneur (101) dans le carter d'admission (110), de telle sorte qu'un canal de passage (102) est mis au même niveau qu'un canal d'admission (111) du carter d'admission (110) lorsque l'actionneur (101) est ouvert,
ledit canal d'admission (111) s'étendant selon une direction circonférentielle du carter d'admission (110),
ledit actionneur (101) étant logé dans un alésage radial de réception (112) du carter d'admission (110),
ledit actionneur (101) comportant une première branche (202),
ladite première branche (202) s'étendant dans le sens radial (r) du carter d'admission (110) et formant une partie du canal de passage (102),
ladite première branche (202) étant agencée pour obturer le canal d'admission (111), de façon étanche à l'écoulement, à l'état fermé de l'actionneur (101), et ladite première branche (202) étant agencée pour s'appliquer dans une rainure de réception (113) du carter d'admission (110), au même niveau que celle-ci, à l'état ouvert.
